# EUROPÄISCHE PATENTSCHRIFT

(11) **EP 2 029 301 B1**
(45) Veröffentlichungstag und Bekanntmachung des Hinweises auf die Patenterteilung: **04.11.2009**
(21) Anmeldenummer: 07722351.9
(22) Anmeldetag: 03.05.2007
(51) Int. Cl.: B23C 5/10, B23C 5/28

(54) **FRÄSERWERKZEUG MIT EINEM KÜHLKANALSYSTEM**
MILLING CUTTER TOOL COMPRISING A COOLING DUCT SYSTEM
OUTIL DE FRAISAGE COMPRENANT UN SYSTÈME À CONDUIT DE REFROIDISSEMENT

(30) Priorität: 03.05.2006 DE 202006007085 U
(43) Veröffentlichungstag der Anmeldung: 04.03.2009
(73) Patentinhaber: Hofmann & Vratny OHG, 85617 Assling (DE)
(72) Erfinder: VRATNY, Zdenek, 85617 Assling (DE); FINGER, Georg, 85617 Assling (DE)
(74) Vertreter: Czybulka, Uwe
(86) Internationale Anmeldenummer: PCT/DE2007/000794
(87) Internationale Veröffentlichungsnummer: WO 2007/124738

(56) Entgegenhaltungen:
- WO-A1-03/024661
- JP-A- 11 033 812
- US-B1- 6 394 711

## Beschreibung

Die Erfindung bezieht sich auf ein Fräserwerkzeug mit einem zylindrischen Werkzeugschaft gemäß dem Oberbegriff des Schutzanspruches 1, wie z.B. aus der JP-A-11 033812 bekannt.

Ein solches Fräserwerkzeug weist einen zylindrischen Werkzeugschaft auf, der an einem Ende in eine Fräsmaschine einspannbar ist und an seinem Umfang zumindest eine Fräsfläche aufweist. Im Werkzeugschaft ist ein zentraler Kühlkanal vorgesehen, von dem Zweigkanäle abzweigen, die aus dem Werkzeugschaft herausführen. Dieses Kühlkanalsystem dient im Wesentlichen dazu, die bei dem Fräsvorgang erzeugte Wärme abzuführen, um Beschädigungen am Werkzeug und am Werkstück möglichst zu vermeiden.

Bei bekannten Fräserwerkzeugen zweigen von dem zentralen Kühlkanal mehrere Zweigkanäle ab, und zwar im Wesentlichen Zweigkanäle, die aus der Spitze oder in der Nähe der Spitze des Fräserwerkzeuges austreten, sowie weitere Zweigkanäle, die von dem zentralen Kühlkanal rechtwinklig zu dessen Längsachse abzweigen und in Spanabführrillen an der Fräsfläche oder den Fräsflächen münden. Das verwendete Kühlmedium dient des Weiteren dazu, auch die bei dem Fräsvorgang erzeugten Späne abzuführen.

Der Erfindung liegt die Aufgabe zugrunde, zum einen die Kühlwirkung des Kühlkanalsystemes zu verbessern und auch eine Möglichkeit anzugeben, die Spanabführung zu optimieren.

Diese Aufgaben sind gemäß der Erfindung durch die Merkmale des Schutzanspruches 1 gelöst.

Demgemäß sind zumindest einige Zweigkanäle des Fräserwerkzeuges gegen die Längsachse des zentralen Kühlkanales in Richtung auf das Einspannende des Werkzeugschaftes geneigt angeordnet.

Der Neigungswinkel dieser Zweigkanäle gegenüber der Senkrechten auf den zentralen Kühlkanal liegt zwischen etwa 5° und 45° bevorzugt bei etwa 30°.

Eine solche Neigung der Kühlkanäle, die in den Spanabführrillen enden, hat gegenüber von der Längsachse senkrecht abzweigenden Zweigkanälen den Vorteil, dass das Kühlmedium aus den Zweigkanälen praktisch ungehindert austreten kann, sodass die Kühlwirkung erhöht wird. Da gleichzeitig die Zweigkanäle etwa in Fließrichtung der abzuführenden Späne ausgerichtet sind, werden die beim Fräsen erzeugten Späne wesentlich wirkungsvoller als bisher mitgenommen und aus dem Bereich des Werkstücks schnell abgeführt. Die Zweigkanäle sind hierbei vorzugsweise nur im Bearbeitungsbereich des Fräserwerkzeuges angeordnet.

Gemäß einer bevorzugten Ausführungsform der Erfindung sind in herkömmlicher Weise Zweigkanäle vorgesehen, die im Bereich der Spitze des Fräserwerkzeuges austreten, wobei daran anschließend noch Zweigkanäle vorgesehen sein können, die gegenüber der Längsachse des zentralen Kühlkanales leicht gegen die Spitze des Werkzeugschaftes geneigt sind; ferner ist ebenfalls im Bereich nahe der Spitze des Werkzeugschaftes zumindest ein Zweigkanal vorgesehen, der im Wesentlichen senkrecht zu der Längsachse des zentralen Kühlkanales verläuft. Die daran anschließenden sind gegen die Längsachse des zentralen Kühlkanales in Richtung auf das Einspannende des Werkzeugschaftes geneigt.

Weitere Ausgestaltungen der Erfindung gehen aus den Unteransprüchen hervor.

Die Erfindung ist in einem Ausführungsbeispiel anhand der Zeichnung näher erläutert. In dieser stellen dar:
Figur 1 einen Längsschnitt durch ein Fräserwerkzeug mit einem Kühlkanalsystem gemäß der Erfindung;
Figuren 2a bis 2g jeweils Querschnitte durch das Fräserwerkzeug gemäß Figur 1 in unterschiedlichen Drehwinkelebenen in Bezug auf die Längsachse des Fräserwerkzeuges.

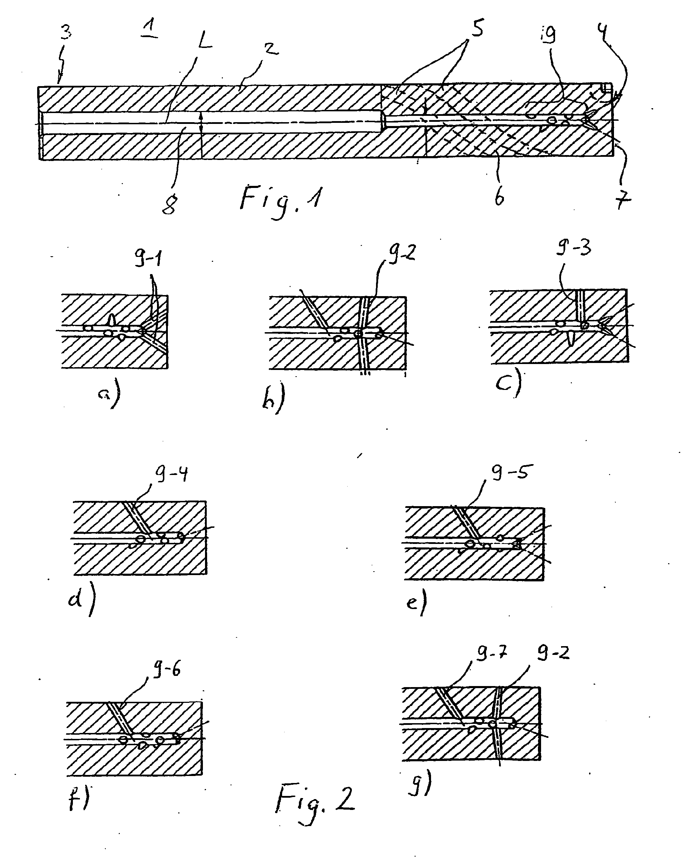

In Figur 1 ist ein Fräserwerkzeug 1 im Längsschnitt dargestellt, das einen zylindrischen Werkzeugschaft 2 aufweist, der an einem Ende 3, dem so genannten Einspannende, in eine Fräsmaschine eingespannt werden kann. Das dem Einspannende 3 gegenüber liegende Ende des Fräserwerkzeuges 1 wird als Stirnseite 4 bezeichnet. Ausgehend von der Stirnseite 4 verlaufen in Richtung auf das Einspannende 3 zum Beispiel vier hier nur angedeutete Fräsflächen 5, die mit einem Spiralwinkel von 45° gegenüber der Längsachse L des Fräserwerkzeuges verlaufen. Zwischen den Fräsflächen 5, zum Beispiel so genannten Schrupp- oder Schlicht-Flächen, sind konkave Spanabführrillen 6 vorgesehen. An der Stirnseite 4 enden die Fräsflächen 5 in hier nur angedeuteten Stirnschneiden 7.

Ausgehend von dem Einspannende 3 ist ein mit der Längsachse L koaxialer zentraler Kühlkanal 8 vorgesehen, der kurz vor der Stirnseite 4 endet. Der zentrale Kühlkanal kann, wie in Figur 1 gezeigt, im Bereich der Fräsflächen 5 einen geringeren Durchmesser als im Bereich des Einspannendes 3 aufweisen.

Von dem zentralen Kühlkanal 4 zweigen von dem der Stirnseite 4 zugewandten Bereich mehrere Zweigkanäle 9 ab, wie dieses im Einzelnen in den Figuren 2a bis 2g gezeigt ist.

Wie in Figur 2a gezeigt, zweigen von dem der Stirnseite 4 zugewandten Ende des zentralen Kühlkanales zwei Zweigkanäle 9-1 ab, die gegenüber der Längsachse L des Werkzeugschaftes 2 geneigt angeordnet sind und in der Stirnseite 4 des Werkzeugschaftes im Bereich der Stirnschneiden 7 münden. Sämtliche anderen Zweigkanäle münden am Außenumfang des Werkzeugschaftes 2 in die Spanabführrillen 6.

So sind zum Beispiel im Anschluss an die Zweigkanäle 9-1 zwei Zweigkanäle 9-2 vorgesehen, die leicht gegen die Stirnseite 4 des Werkzeugschaftes 2 geneigt sind, zum Beispiel mit einem Winkel von 5° gegenüber der Senkrechten auf die Längsachse des zentralen Kühlkanals 8. Anschließend kann noch ein Zweigkanal 9-3 vorgesehen sein, der ebenfalls in einer Spanabführrille 6 mündet und senkrecht zu der Längsachse L des Werkzeugschaftes ausgerichtet ist.

Daran schließen sich gemäß den Figuren 2d, 2e, 2f beziehungsweise 2g Zweigkanäle 9-4, 9-5, 9-6 beziehungsweise 9-7 an, die sämtlich in einer Spanabführrille 6 enden und in Richtung auf das Einspannende 3 des Werkzeugschaftes 2 geneigt angeordnet sind. Der Neigungswinkel dieser Zweigkanäle beträgt in diesem Falle etwa 60° gegenüber der Längsachse L des Werkzeugschaftes, beziehungsweise 30° gegenüber der Senkrechten zu der Längsachse L. Durch diese winkelmäßige Anordnung der Kühlkanäle 9-4 bis 9-7 strömt ein durch den zentralen Kühlkanal 8 zugeführtes Kühlmedium glatt in die Spanabführrillen 6, sodass hierin befindliche Späne eines zu fräsenden Werkstückes optimal abgeführt werden. Es sind natürlich andere Neigungswinkel möglich, jedoch soll darauf geachtet werden, dass das Kühlmedium ohne wesentliche Turbulenzen in die Spanabführrille einströmen kann. Neigungswinkel zwischen 5° und 80° gegenüber der Längsachse L sind möglich, als vorteilhaft hat sich jedoch der erwähnt Neigungswinkel von etwa 60° herausgestellt.

Durch die gegenüber der Längsachse geneigte Anordnung der Zweigkanäle 9-4, 9-5, 9-6 und 9-7 kann das Kühlmedium ungehindert in die Spanabführrillen 6 austreten, wodurch zum einen die Kühlwirkung erhöht wird und zum anderen die in den Spanabführrillen 6 angesammelten Späne des bearbeiteten Werkstückes optimal abgeführt werden.

Es ist selbstverständlich, dass die Anordnung und Anzahl der Zweigkanäle entsprechend den Dimensionen des Fräserwerkzeuges 1 variiert werden kann.

## Patentansprüche

1. Fräserwerkzeug (1) mit einem zylindrischen Werkzeugschaft (2), der an einem Ende (3) in eine Fräsmaschine einspannbar ist und an seinem Umfang zumindest eine Fräsfläche (5) aufweist, wobei im Werkzeugschaft (2) ein zentraler Kühlkanal (8) vorgesehen ist, von dem Zweigkanäle (9) abzweigen, die aus dem Werkzeugschaft (2) herausführen, **dadurch gekennzeichnet, dass** zumindest einige Zweigkanäle (9-4, 9-5, 9-6, 9-7) gegen die Längsachse (L) des zentralen Kühlkanales (8) in Richtung auf das Einspannende (3) des Werkzeugschaftes (2) geneigt angeordnet sind.

2. Fräserwerkzeug nach Anspruch 1, **dadurch gekennzeichnet, dass** der Werkzeugschaft an seinem Umfang zumindest eine spiralförmig verlaufende Fräsfläche (5) und eine an diese angrenzende Spanabführrille (6) aufweist, und dass die Zweigkanäle (9-2 bis 9-7) in die zumindest eine Spanabführrille (6) münden.

3. Fräserwerkzeug nach Anspruch 1 oder 2 **dadurch gekennzeichnet, dass** der Werkzeugschaft (2) mehrere, insbesondere vier spiralförmig verlaufende Fräsflächen (5) und dazwischen liegende Spanabführrillen (6) aufweist.

4. Fräserwerkzeug nach einem der vorhergehenden Ansprüche, **dadurch gekennzeichnet, dass** die gegen das Einspannende (3) des Werkzeugschaftes (2) geneigt angeordneten Zweigkanäle (9-4, 9-5, 9-6, 9-7) einen Neigungswinkel zwischen 5° und 80°, vorzugsweise von 60° gegenüber der Längsachse (L) des zentralen Kühlkanales (8) einnehmen.

5. Fräserwerkzeug nach einem der vorhergehenden Ansprüche, **dadurch gekennzeichnet, dass** ausgehend von der dem Einspannende (3) gegenüber liegenden Stirnseite (4) des Fräserwerkzeuges (1) in Folge zunächst zumindest ein Zweigkanal (9-1) abzweigt, der in der Stirnseite (4) mündet, danach zumindest ein Zweigkanal (9-2) abzweigt, der gegenüber der Längsachse (L) des zentralen Kühlkanales (8) leicht gegen die Stirnseite des Werkzeugschaftes (2) geneigt ist, anschließend zumindest ein Zweigkanal (9-3) abzweigt, der im Wesentlichen senkrecht zu der Längsachse (L) des zentralen Kühlkanales (8) verläuft, und anschließend mehrere Zweigkanäle (9-4, 9-5, 9-6, 9-7) abzweigen, die gegen die Längsachse (L) des zentralen Kühlkanales (8) in Richtung auf das Einspannende (3) des Werkzeugschaftes (2) geneigt sind.

6. Fräserwerkzeug nach einem der vorhergehenden Ansprüche, **dadurch gekennzeichnet, dass** die Fräsflächen (5) Schrupp- und/oder Schlicht-Fräsflächen sind.

## Claims

1. A milling cutter (1) comprising a cylindrical tool shank (2) which can be clamped into a milling machine at one end (3) and comprises at least one milling surface (5) on its circumference, a central cooling duct (8) being provided in the tool shank (2), from which branch channels (9) are branched off, which lead out of the tool shank (2), **characterized in that** at least a few branch channels (9-4, 9-5, 9-6, 9-7) are disposed in an inclined fashion with respect to the longitudinal axis (L) of the central cooling duct (8) in the direction towards the clamping end (3) of the tool shaft (2).

2. The milling cutter according to claim 1, **characterized in that** the tool shank comprises at least one milling surface (5) on its circumference, which extends in a spiral fashion and a chip discharge channel (6) adjoining said milling surface and that the branch channels (9-2 to 9-7) end in the at least one chip discharge channel (6).

3. The milling cutter according to claim 1 or 2, **characterized in that** the tool shank (2) comprises several, in particular four, spirally extending milling surfaces (5) and chip discharge channels (6) located therebetween.

4. The milling cutter according to any of the preceding claims, **characterized in that** the branch channels (9-4, 9-5, 9-6, 9-7) disposed in an inclined fashion with respect to the clamping end (3) of the tool shank (2) have an angle of inclination of between 5° and 80°, preferably 60°, with respect to the longitudinal axis (L) of the central cooling duct (8).

5. The milling cutter according to any of the preceding claims, **characterized in that**, starting from the front side (4) of the milling cutter located opposite to the clamping end (3), successively, at least one branch channel (9-1) branches off, which ends in the front side (4), then at least one branch channel (9-2) branches off which is slightly inclined with respect to the front side of the tool shank (2) with respect to the longitudinal axis (L) of the central cooling duct (8), subsequently, at least one branch channel (9-3) branches off, which extends substantially vertically to the longitudinal axis (L) of the central cooling duct (9) and, subsequently, several branch channels (9-4, 9-5, 9-6, 9-7) branch off, which are inclined with respect to the longitudinal axis (L) of the central cooling duct (8) in the direction towards the clamping end (3) of the tool shank (2).

6. The milling cutter according to any of the preceding claims, **characterized in that** the milling surfaces (5) are roughing and/or smoothing milling surfaces.

## Revendications

1. Outil de fraisage (1) comportant une tige d'outil (2) cylindrique, qui peut être montée à une extrémité (3) dans une machine à fraiser et qui présente à sa périphérie au moins une surface de fraisage (5), dans un canal de refroidissement (8) central étant prévu la tige d'outil (2), depuis lequel bifurquent des canaux de dérivation (9) qui sortent de la tige d'outil (2), **caractérisé en ce qu'**au moins quelques canaux de dérivation (9-4, 9-5, 9-6, 9-7) sont agencés de façon inclinée contre l'axe longitudinal (L) du canal de refroidissement central (8) en direction de l'extrémité de montage (3) de la tige d'outil (2).

2. Outil de fraisage selon la revendication 1, **caractérisé en ce que** la tige d'outil présente sur sa périphérie au moins une surface de fraisage (5) s'étendant en forme de spirale et une rainure d'évacuation de copeaux (6) et **en ce que** les canaux de dérivation (9-2 à 9-7) débouchent dans ladite au moins une rainure d'évacuation de copeaux (6).

3. Outil de fraisage selon la revendication 1 ou 2, **caractérisé en ce que** la tige d'outil (2) présente plusieurs, en particulier quatre surfaces de fraisage (5) s'étendant en forme hélicoïdale et des rainures d'évacuation de copeaux (6) situées entre celles-ci.

4. Outil de fraisage selon l'une quelconque des revendications précédentes, **caractérisé en ce que** les canaux de dérivation (9-4, 9-5, 9-6, 9-7) agencés de façon inclinée contre l'extrémité de montage (3) de la tige d'outil (2) forment un angle d'inclinaison entre 5° et 80°, de préférence de 60° par rapport à l'axe longitudinal (L) du canal de refroidissement (8) central.

5. Outil de fraisage selon l'une quelconque des revendications précédentes, **caractérisé en ce que** partant de la face frontale (4) de l'outil de fraisage (1), située à l'opposé de l'extrémité de montage (3), bifurquent les uns après les autres tout d'abord au moins un canal de dérivation (9-1) qui débouche dans la face frontale (4), ensuite au moins un canal de dérivation (9-2) qui est légèrement incliné contre la face frontale de la tige d'outil (2) par rapport à l'axe longitudinal (L) du canal de refroidissement (8) central, ensuite au moins un canal de dérivation (9-3) qui s'étend sensiblement perpendiculairement à l'axe longitudinal (L) du canal de refroidissement (8) central, et ensuite plusieurs canaux de dérivation (9-4. 9-5, 9-6, 9-7) qui sont inclinés contre l'axe longitudinal (L) du canal de refroidissement (8) central en direction de l'extrémité de montage (3) de la tige d'outil (2).

6. Outil de fraisage selon l'une quelconque des revendications précédentes, **caractérisé en ce que** les surfaces de fraisage (5) sont des surfaces de fraisage de dégrossissement et/ou et des surfaces de fraisage de finition.
